(19)

Europäisches Patentamt
European Patent Office
Office européen des brevets

(11) **EP 4 017 156 B1**

(12) **EUROPEAN PATENT SPECIFICATION**

(45) Date of publication and mention of the grant of the patent:
**24.04.2024 Bulletin 2024/17**

(21) Application number: **21160688.4**

(22) Date of filing: **04.03.2021**

(51) International Patent Classification (IPC):
**H04W 68/02** $^{(2009.01)}$

(52) Cooperative Patent Classification (CPC):
**H04W 68/02; H04W 76/28**

(54) **METHOD FOR EFFICIENT PAGING OF MOBILE UES USING EXTENDED DRX AND A RANDOMIZED PTWS PROCEDURE**

VERFAHREN ZUM EFFIZIENTEN PAGING VON MOBILEN BENUTZERGERÄTEN UNTER VERWENDUNG VON ERWEITERTEN DRX UND EINER RANDOMISIERTEN PTWS-PROZEDUR

PROCÉDÉ DE RADIOMESSAGERIE EFFICACE D'ÉQUIPEMENTS UTILISATEURS MOBILES À L'AIDE DE DRX ÉTENDU ET D'UNE PROCÉDURE PTWS ALÉATOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2020 EP 20214446**

(43) Date of publication of application:
**22.06.2022 Bulletin 2022/25**

(73) Proprietor: **Shenzhen Goodix Technology Co., Ltd. Shenzhen, Guangdong 518045 (CN)**

(72) Inventor: **Kurth, Mathias 01277 Dresden (DE)**

(74) Representative: **Lippert Stachow Patentanwälte Rechtsanwälte Partnerschaft mbB Krenkelstraße 3 01309 Dresden (DE)**

(56) References cited:
WO-A1-2018/063467

- INTEL CORPORATION: "Remaining issues in eDRX", 3GPP DRAFT; R2-163633_REMAINING_ISSUES_IN_EDRX__INTEL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, China; 20160523 - 20160527 22 May 2016 (2016-05-22), XP051105067, Retrieved from the Internet: URL:http://www.3gpp.org/ftp/Meetings_3GPP_SYNC/RAN2/Docs/ [retrieved on 2016-05-22]
- ERICSSON: "Wake Up Signal", 3GPP DRAFT; R2-1804962, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Sanya, China; 20180416 - 20180420 14 April 2018 (2018-04-14), XP051428656, Retrieved from the Internet: URL:http://www.3gpp.org/ftp/Meetings%5F3GPP%5FSYNC/RAN2/Docs/ [retrieved on 2018-04-14]

EP 4 017 156 B1

**Description**

The invention relates to a method for efficient paging of mobile user equipment (UEs), using extended discontinuous reception (eDRX) and a randomized paging time windows (PTWs) procedure.

According to recent market forecasts, the Internet-of-Things (IoT) segment is expected to grow considerably within the next few years. Many use cases like supply chain tracking require network coverage with seamless mobility support as provided by today's cellular networks. To cope with the massive number of IoT devices expected, the 3GPP standardization body has introduced Machine type communication (MTC) capabilities into the cellular network technology.

In the following, the invention is illustrated using the NarrowBand Internet-of-Things (NB-IoT) access technology as well as the Evolved Packet Core (EPC). The invention is not limited to the selected technology; it can be applied to 4G E-UTRAN, eMTC and other technologies using extended discontinuous reception (eDRX) as well.

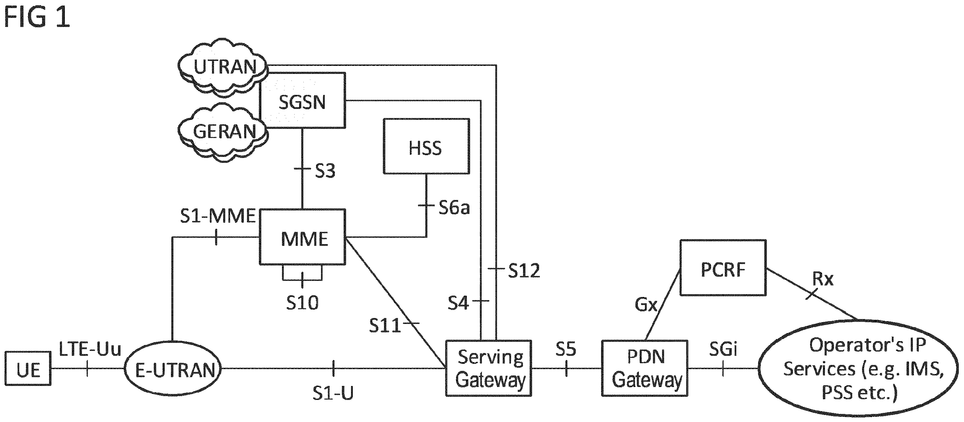

Figure 1 shows the network architecture reference model of the 4th generation (4G) 3GPP cellular network. The Access Stratum (AS) consists of Evolved Universal Terrestrial Radio Access Network (E-UTRAN) and the User Equipment (UE). The Evolved Node B (eNodeB) is the network element of the E-UTRAN. Within the description of the invention the terms eNodeB, base station and radio access node are used synonymously. Narrowband-IoT is a subset of E-UTRAN.

The Evolved Packet Core (EPC) comprises following subcomponents: a Mobility Management Entity (MME), a Serving Gateway (SGW), a Packet Data Network Gateway (PGW), and a Home Subscriber Server (HSS).

The MME is the key control-node for the LTE access-network. The MME entity verifies subscriber authorization, manages the location of the User Equipment (UE) with the Tracking Area (TA), and stores the connection states and security parameters of the subscriber UE devices. When the tracking area is changed, the MME instance receives a tracking area update. So, it is involved in the bearer activation/deactivation process and is also responsible for choosing the Serving Gateway (SGW) for a UE at the initial attach and at time of intra-LTE handover involving Core Network (CN) node relocation. It is responsible for authenticating the user (by interacting with the Home Subscriber Server). The Non Access Stratum (NAS) signaling terminates at the MME and it is also responsible for generation and allocation of temporary identities to UEs. It checks the authorization of the UE to camp on the service provider's Public Land Mobile Network (PLMN) and enforces UE roaming restrictions. The MME is the termination point in the network for ciphering/integrity protection for NAS signaling and handles the security key management. The MME provides the control plane function for mobility between LTE and 2G/3G access networks with the S3 interface terminating at the MME from the SGSN. The MME also terminates the S6a interface towards the HSS for roaming UEs.

The SGW routes and forwards user data packets, while also acting as the mobility anchor for the user plane during inter-eNodeB handovers and as the anchor for mobility between LTE and other 3GPP technologies (terminating S4 interface and relaying the traffic between 2G/3G systems and Packet Data Network Gateway). For idle state User Equipment, the SGW terminates the downlink data path and triggers paging when downlink data arrives for the UE. It manages and stores UE contexts, e. g. parameters of the IP bearer service, network internal routing information.

The Packet Data Network Gateway (PDN Gateway, also PGW) provides connectivity from the UE to external packet data networks (PDNs) by being its point of exit and entry of traffic. A piece of UE may have simultaneous connectivity with more than one Packet Data Network Gateway for accessing multiple packet data networks. The PGW performs policy enforcement, packet filtering for each user, charging support, lawful interception and packet screening. Another key role of the PGW is to act as the anchor for mobility between 3GPP and non-3GPP technologies such as WiMAX and 3GPP2.

The HSS is a central database that contains user-related and subscription-related information. The functions of the HSS include functionalities such as mobility management, call and session establishment support, user authentication and access authorization. The HSS is based on pre-Rel-4 Home Location Register (HLR) and Authentication Center (AuC).

In figure 1, the transitions between the single architecture components indicate interfaces that acting upon specific protocols.

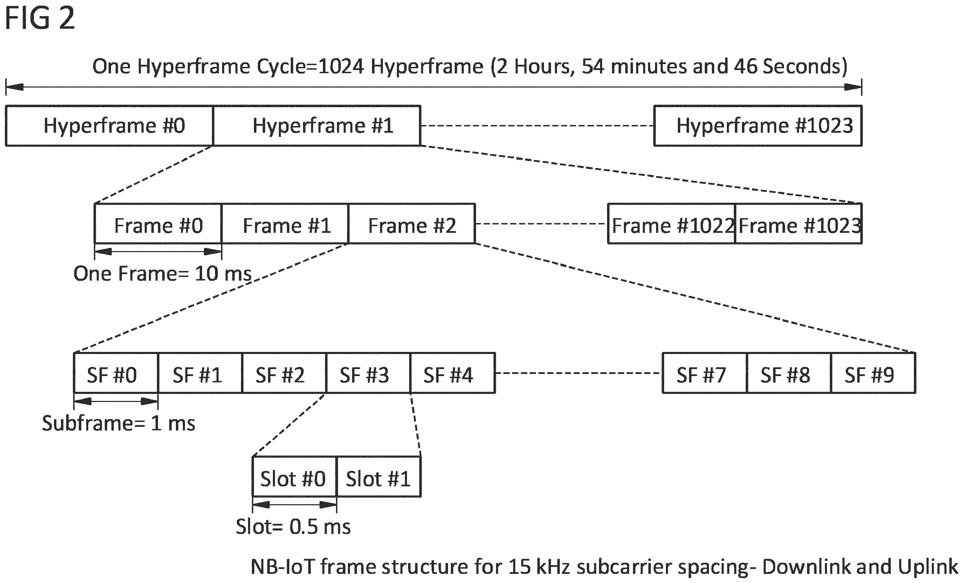

For synchronization purposes between an eNodeB and a UE, the time on the AS is partitioned into frames. The frame structure of NB-IoT is shown in figure 2. A sub-frame consists of two slots of $500\mu s$ each. A system frame of 10ms contains 10 sub-frames. A hyper system frame has 1024 system frames (10.24s). A hyper system frame cycle consists of 1024 hyper system frames covering about 3 hours.

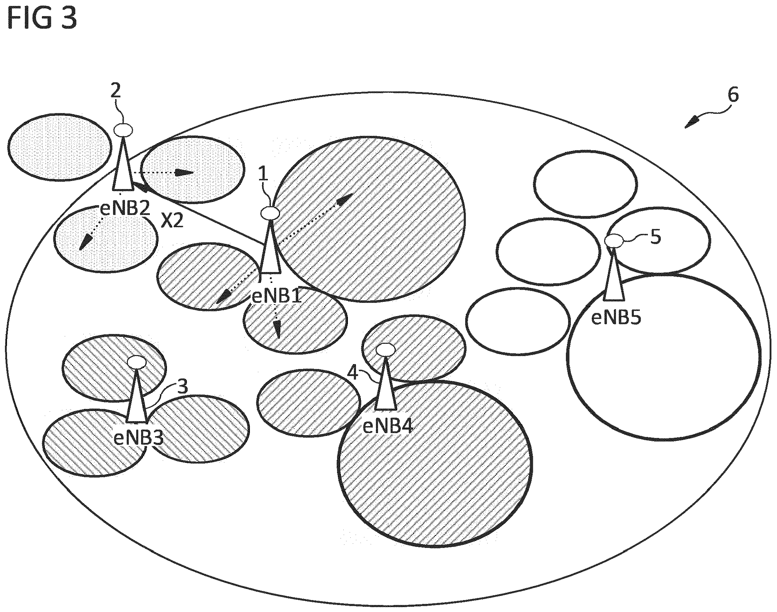

The cellular network supports mobile UEs in both active and idle state. When the UE is in idle state, the network tracks the location of the UE on a level of tracking area (TA). A tracking area 6 consists of a set of eNodeBs 1-5 connected to the same MME as shown in figure 3. The TA 6 in figure 3 includes a first radio access node 1, and four neighboring radio access nodes 2,3,4,5 and wherein each radio access node is an eNodeB, eNB, in the LTE network. Each eNodeB, eNB1-eNB5, is responsible for radio-related functions in adjacent cells, wherein cells served by the same eNodeB are illustrated by identical filling patterns in the schematic view. In the schematic view, each eNodeB is visualized as a physical entity with a single antenna. However, an eNodeB is a logical node that may be implemented through one or more physical radio base stations.

During initial attach or on entering a new TA 6, the UE registers within the TA 6 (or within multiple TAs). The EPC knows the location of the UE at TA level. The UE can freely roam between eNodeBs 1-5 within the registered TA(s) 6 without the need to inform the EPC.

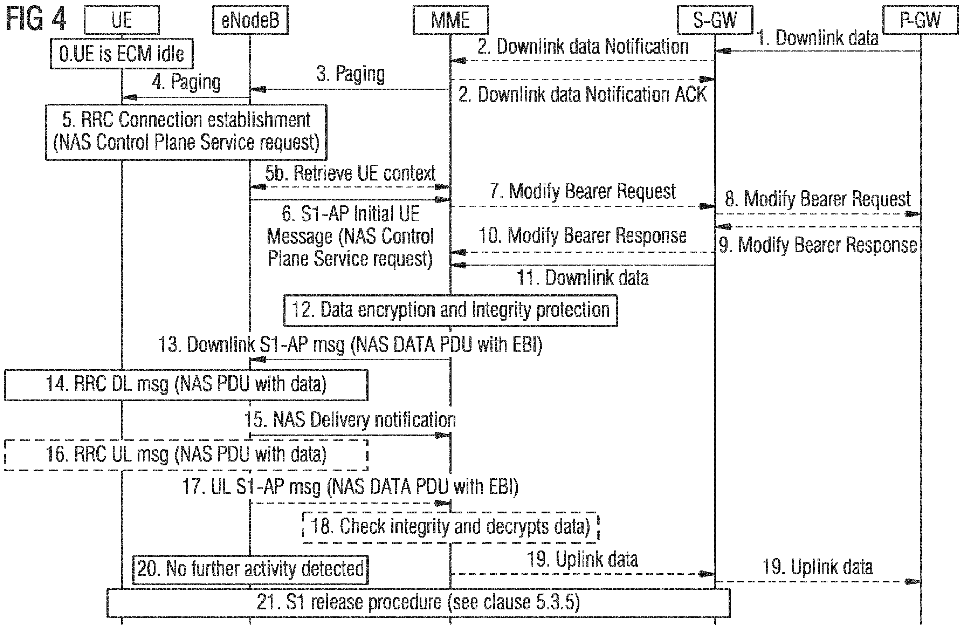

The procedure of locating the position of the UE at eNodeB-level is called paging. When data arrives at the EPC for the UE, paging is used to locate the UE and establish a signaling connection for downlink data delivery. The procedure for mobile terminated (MT) data transport in NB-IoT is shown in figure 4. The PGW delivers the data to SGW, where it remains until the UE has established a signaling connection. The SGW informs the MME about the downlink data, and the MME initiates the paging procedure, which is described in the following. The MME sends a paging request to eNodeB(s) according to a proprietary paging strategy. On the radio access network (RAN) level, the UE periodically listens for broadcast paging messages using a network-defined paging cycle. The eNodeB sends out a broadcast paging message within a predefined time slot determined by the paging occasion (PO) sub-frame, paging frame (PF), and paging hyper-frame (PH). A UE wakes up in a specific subframe either subframe 0, 4, 5 or 9 within a radio frame. These specific subframes within a Paging Frame when UE wakes up are called as Paging Occasions (POs). The RAN paging message is a broadcast: it is received by multiple UEs. The paging message contains the identities of the UEs that are paged. If the paging message was successfully received by the paged UE, it initiates a signaling connection to the MME. The SGW is informed and the downlink data is delivered to the UE via the MME encapsulated within Non Access Stratum (NAS) Data Protocol Data Units (PDUs). The paging has failed when no signaling connection was established. Depending on paging strategy and network configuration, the MME might start a further paging attempt, or it might declare the UE unreachable.

The paging strategy determines in which order the MME involves the eNodeBs of the TA(s) into the paging procedure. Well-known paging strategies are:

1. Blanket paging: The MME pages the UE at all eNodeBs of the registered TA(s). Blanket paging is a simple strategy with low paging latency but high paging resource consumption and high signaling load.

2. Sequential paging: The TA is partitioned into paging zones. The MME pages all eNodeBs within a paging zone in parallel. If the paging attempt fails, the MME escalates the paging to other paging zones. The paging zones are generally constructed according to the expected probability of presence of the paged UE.

3. Shortest-distance-first: Paging zones can be constructed according to the distance to the eNodeB where the last location update of the UE has happened.

The paging strategy determines the tradeoff between paging load and paging delay. Furthermore, the size of the TA is a critical network planning parameter determining the tradeoff between location update costs versus paging costs.

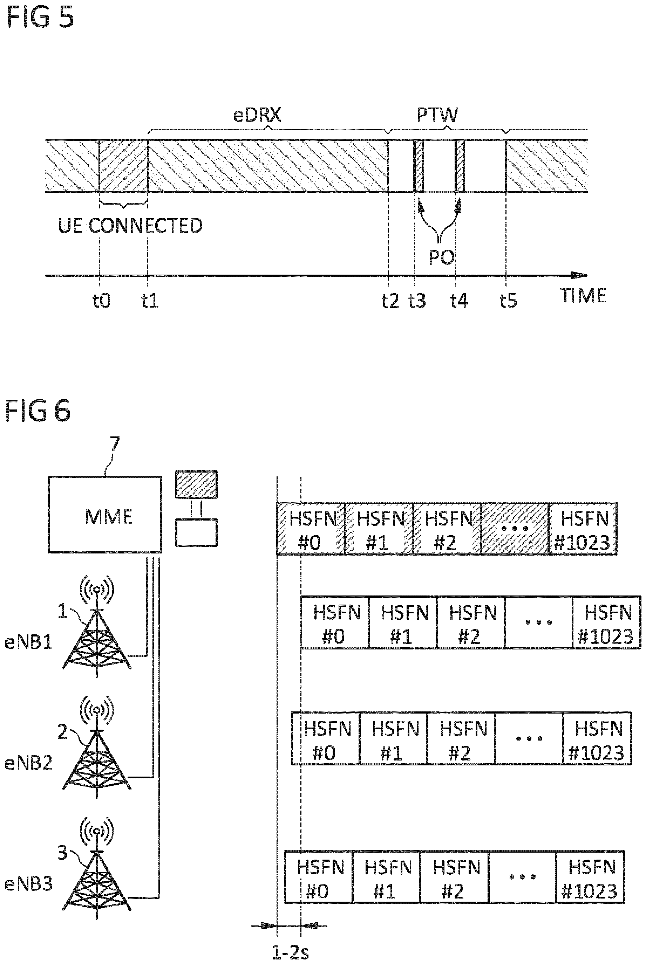

The setup of a voice call should not take more than some seconds to meet customer experiences. Thus, the voice-enabled UE must be reachable on a second basis. For IoT devices, on the other hand, energy consumption might be more important than reachability. 3GPP has introduced a high latency communication in combination with Power Saving Mode (PSM) and Extended Idle mode Discontinuous Reception (eDRX). An extended DRX cycle is shown in figure 5. As illustrated in figure 5, the UE is in a connected state during a period from time t0 to time t1. The MME may configure the eDRX to the UE within this period. During the period from time t1 to time t2, the UE is in the sleep state of the eDRX. The period from time t1 to time t5 corresponds to the eDRX cycle, which consists of the eDRX inactivity (sleep state), and the PTW. At time t2, the UE exits (wakes up) the sleep state of the eDRX cycle. The period from time t2 to time t5 corresponds to the paging transmission window (PTW). Based on the paging message from the MME, the eNodeB repeatedly transmits the paging at the paging reception opportunity (PF and PO) within the paging transmission window. At time t3 and time t4, the paging reception opportunity (PF and PO) of the UE occurs. The paging reception opportunity is also called paging occasion. The eNodeB repeatedly transmits the paging to the UE at time t3 and time t4. At time t5, the UE transitions from the wake-up state of the eDRX to the sleep state.

Extended Idle mode DRX (eDRX) allows interrupting the idle mode DRX operation to save power. The interruption time is called eDRX inactivity. The remaining time within the eDRX cycle is called Paging Time Window (PTW). So, the eDRX inactivity period and the paging time window forms the eDRX cycle. Both network and UE negotiate the eDRX cycle and the PTW within the attach and tracking area update (TAU) procedure. The location of the PTW within the eDRX cycle in terms of paging hyper-frame (PH) and paging frame (PF) is pseudo-random and depends on the identity of the UE. For load balancing purposes, the PTWs of different UEs are uniformly distributed across the eDRX cycle.

The Paging Time Window is determined as follows (see also 3GPP TS 36.304 Release 13 (and newer)):

- The paging Hyper-(H) System frame number (SFN) is determined as: H-SFN mod $T_{eDRX,H}$ = (UE_ID_H mod $T_{eDRX,H}$), whereas $T_{eDRX,H}$ is the eDRX cycle in number of hyperframes and UE_ID_H are the 12 most significant bits of a hashed ID (defined below);

- The paging frame system-frame-number (SFN) is determined as: $SFN = 256 * i_{eDRX}$, with $i_{eDRX} = floor (UE\_ID\_H / T_{eDRX,H})$ mod 4;
- The hashed ID is determined by hashed ID = ~ (crc32(0xFFFF FFFF) ^ crc32(M-TMSI)), with '~' is the ones complement, '^' is exclusive OR, 'crc32' is the 32-bit cyclic redundancy check using the ITU generator polynomial and 'M-TMSI' is the MME Temporary Mobile Subscriber Identity (32-bit).

The floor expression means to round down. The 32-bit cyclic redundancy check uses the generator polynomial 0x104C11DB7 as defined by the ITU-T V.42.

The UE is reachable for mobile terminated (MT) data and signaling during the PTW only. The implications on the MT Data transport use case (see figure 4) are as follows. The MME needs to be aware whether and when the target UE is reachable next. This is achieved by loose hyper-SFN synchronization between MME and eNodeB, described in the following. For MT data, the MME informs the SGW about the expected time it needs to buffer the data before the UE becomes reachable again. Furthermore, the MME needs to time-align the paging requests towards the eNodeB(s) according to the PTW of the UE.

3GPP supports the monitoring of the UE reachability. When the UE is not reachable due to eDRX inactivity, EPC internal as well as connected user applications can request to be informed when the UE becomes reachable again. The UE reachability can be used to migrate the buffering of MT data from the SGW to the application.

When using eDRX within a TA, the MME needs to know the PTW start and end of the UE to be paged. The PTW is determined by the frame timing of the AS, the eDRX configuration as well as NAS-level identities of the UE. For that purpose, 3GPP mandates a so-called loose Hyper-SFN Synchronization (3GPP TS 23.682 Release 13 (and newer)) between MME and eNodeB within a TA, see also INTEL COOPERATION: "Remaining issues in eDRX", 3GPP DRAFT, R2-163633, 22. May 2016. WO 2018/063467 A1 refers also to a configuration of DRX parameters. In addition, in Ericsson: "Wake Up Signal", 3GPP DRAFT; R2-1804962 an additional wake up signal in combination with the eDRX technique is disclosed.

Loose Hyper-SFN Synchronization requires that the time difference between MME and each eNodeB within the TA is not more than 1-2s as shown in figure 6 (with reference to US 20180263012 A1). In other words, the eNodeBs in the tracking area have a coarse time-synchronization. The synchronization mechanism shown in figure 6 requires a performance improvement of the MME and the eNodeB which also increases system complexity. The reason why synchronization having accuracy within 1-2 seconds within an MME and an eNodeB is performed is to minimize or obviate the time taken for the eNodeB to store a paging message.

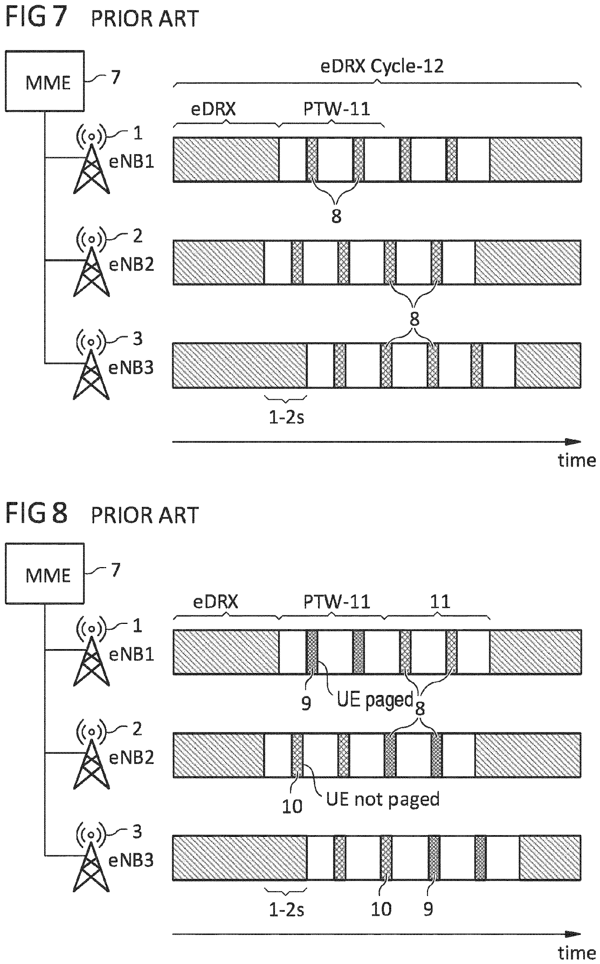

The impact of loose hyper-SFN synchronization on the paging strategy of the MME is as follows. As shown in figure 7, the PTWs for the target UE are overlapping for all eNodeBs within the TA. The allowed variation is 1-2s whereas the minimum paging cycle in NB-IoT is 1.28s. During the negotiation of the eDRX parameters with the UE, the MME needs to dimension the PTW length according to paging strategy. If the PTW is short, the first paging attempts fail because of UE mobility, and the MME has paged the wrong eNodeBs, the UE might enter eDRX inactivity again and might not be reachable for a long time. The MME has then the following options:

1. The MME might prolong the PTW to accommodate additional paging attempts at the expense of the UE power consumption.
2. The MME might escalate paging earlier: By involving eNodeBs earlier, the paging load on the AS increases.
3. The MME continues the paging in the next eDRX cycle leading to higher paging latency as well as longer data buffering at the SGW.

The 3GPP specification favors option 1 [see also R2-161311, TS 23.682 Release 13 (and newer)] to address the issue.

Figure 8 illustrates the resulting time line of the paging procedure. In the shown example, the MME is using sequential paging with two paging zones and two paging occasions per paging zone. The MME pages the UE at eNodeB 1 first, where the UE was registered last. The MME allows for two paging occasions or attempts per paging zone. After two unsuccessful paging attempts at eNodeB 1, the MME escalates the paging to the second paging zone involving eNodeB 2 and 3. As the MME has selected two paging zones with two attempts each, the whole PTW for the UE needs to include four paging cycles.

So, the problem which should be addressed by the present invention is that with the state-of-the-art overlapping paging time windows for a target UE at all eNodeBs in a tracking area of the target UE limits the flexibility of the Mobile Management Entity paging strategy and goes at the expense of UE power consumption as the UE has to be in active mode for example for additional paging attempts.

It is an objective of the present invention to specify a method that allows an efficient paging for mobile user equipment (UEs) which does not go of the power consumption of the UE.

The objective of the present invention is solved by a method according to independent claim 1. The inventive method for efficient paging of mobile UEs, using extended discontinuous reception (eDRX) and a randomized paging time windows (PTWs) procedure, the method comprising the following steps:

- step 1: a mobile management entity (MME) determines at least one eNodeB of several eNodeBs located within a tracking area (TA) of a target UE, where a paging time window (PTW) for said UE is starting next, whereas the PTW is indicated by PTW start;
- step 2: the MME pages the UE during the paging time window (11) of an eDRX cycle of the at least one eNodeB determined in step 1;
- step 3: the MME stops the paging of the target UE if it was successful,
- otherwise the MME continues with step 1 until all eNodeBs in the associated TA of the target UE have been proceeded,

wherein the paging time windows within the eDRX cycle are pseudo-randomly allocated and non-synchronized between eNodeBs, wherein a randomized paging time window start of the eDRX cycle of each of the several eNodeBs (1-5), is achieved by including an identification of the eNodeB in a calculation on the PTW procedure for the target UE using an E-UTR_AN Cell Identifier, ECI, wherein a hashed ID of a Hyper-Frame, H-SFN, where the PTW starts, is calculated by hashed ID = ~ (crc32(OxFFFF FFFF) ^ crc32(M-TMSI ^ ECI)).

The PTW are pseudo-randomly allocated with respect to UE as well as eNodeB and fully non-overlapping across all eNodeBs. The rationale of the randomized PTW feature is that the time location of the PTW within the eDRX cycle changes when the UE changes from one eNodeB to another, i. e. PTWs are not synchronized anymore. With PTWs not synchronized anymore, also the dependency of the PTW length on the paging strategy is reduced. The MME does not need to provision for UE mobility when determining the PTW length. The shorter PTW length reduces the power consumption on the UE side. The paging load on the AS is not increased, i.e. the expected number of paging messages on the radio access network level does not increase. The paging latency becomes random and uniformly distributed across the eDRX cycle. On both UE and network side, no additional state needs to be maintained since the pseudo-random allocation of PTWs is stateless.

In a variant of the inventive method, for low mobile and nomadic UEs, the MME at first determines the PTW of the UE at an eNodeB of the TA of the UE where the UE was registered last, the MME pages the UE at said eNodeB at a time the PTW starts and the MME stops the paging of the UE if it was successful, otherwise the MME continues with step 1 in claim 1.

So, for low mobile and nomadic UEs, the MME might make use of information at which eNodeB the UE was registered last: Firstly, the MME determines the PTW of the UE at eNodeB where the UE was registered last, then it pages the UE at the eNodeB determined in step 1 at the time of the PTW start, and then stop paging on success. On paging failure, default to blanket paging is performed as described above.

According to the inventive method, the randomized paging time window start is achieved by including an identification of the eNodeB in a calculation on the PTW for the target UE using an E-UTRAN Cell Identifier (ECI), whereas a hashed ID of a Hyper-System-Frame-Number (H-SFN), where the PTW starts, is calculated by hashed ID = ~ (crc32(OxFFFF FFFF) ^ crc32(M-TMSI ^ ECI))).

Hence, the randomization of the PTW start is achieved by including the identification of the eNodeB into the calculation on the PTW for the considered/target UE. Using the E-UTRAN Cell Identifier (ECI), the hashed ID can be calculated as follows; hashed ID = ~ (crc32(OxFFFF FFFF) ^ crc32(M-TMSI ^ ECI)), with '~' is the ones complement, '^' is exclusive OR, 'crc32' is the 32 bit cyclic redundancy check using the ITU generator polynomial and 'M-TMSI' is the MME Temporary Mobile Subscriber Identity (32 bit). With the shown formula, the hashed ID becomes pseudo-random with respect to both M-TMSI and ECI. It remains uniformly distributed within the value range of 32 bit. Using the described randomization method is only one possibility and is used as an illustration. Other possibilities or modifications that presents a randomization of the PTW start are also conceivable.

The hashed ID is determined by the UE and / or by the MME. It is mandatory that the hashed ID is calculated by UE and MME, otherwise the eDRX paging procedure will fail.

Both UE and MME can determine the hashed ID, and thus, the PTW without storing any additional state.

According to another variant of the inventive method, during a reselection of the UE from one eNodeB to another, the UE is reading a System-Information-Block1 that contains the ECI, for determining the PTW start within a new eNodeB. The hashed ID changes when the UE reselects to another eNodeB. The information that is required to calculate the new hashed ID is already available on the UE side.

Using this information, the UE can determine the start of the PTW within the new eNodeB without any additional overhead. The information about connected eNodeBs is generally available on the MME side, so that also for the MME the proposed procedure has low overhead.

According to a further variant of the inventive method, the randomized paging time windows (PTWs) procedure is requested by the UE in an attach request message or in a tracking area update request message exchanged between the UE and a network, whereas the network signals an activation of the randomized PTWs procedure within a respective attach accept message or a tracking area update accept message.

This variant enables to remain backward compatible or manages applications where the randomized paging latency imposes issues. The PTW randomization shall be an optional feature that the UE needs to request in the respective ATTACH REQUEST or TRACKING AREA UPDATE REQUEST messages. If the UE requests the feature PTW randomization and the network supports it, the network shall signal the activation within the respective ATTACH ACCEPT or TRACKING AREA UPDATE ACCEPT messages.

Pursuant to another further variant of the inventive method, the method is applicable to all cellular technologies with extended idle mode DRX support, like E-UTRAN LTE, EMTC CAT-M, 5G technologies NR and 5G core.

The invention has been presented using NB-IoT and EPS technology as one example application. It can be applied to all cellular technologies with extended idle mode DRX support like E-UTRAN LTE and eMTC CAT-M as well as 5G technologies NR and 5G core.

The invention will be explained in more detail using exemplary embodiments.

The appended drawings show

Fig. 1     Non-roaming architecture for 3 GPP accesses (see 3GPP TS 23.401, v16.8.0, Fig. 4.2.1-1);

Fig. 2     NB-IoT frame structure (15kHz);

Fig. 3     Example for a tracking area architecture (out of US 9560628 B2);

Fig. 4     Mobile terminated data transport in non-access stratum Protocol Data Units (see 3GPP TS 23.401, v16.8.0, Fig. 5.3.4B.3-1);

Fig. 5     Extended DRX cycle (out of US 20180176883 A1);

Fig. 6     Loose Hyper-System-frame number Synchronization (out of US 20180263012 A1);

Fig. 7     Example of overlapping paging time windows in a tracking area (prior art);

Fig. 8     Example of paging a UE with overlapping paging time windows (prior art);

Fig. 9     Inventive Paging of a UE with fully non-overlapping and non-synchronized paging time windows;

Fig. 10    Non-overlapping paging time windows in a tracking area according to the invention.

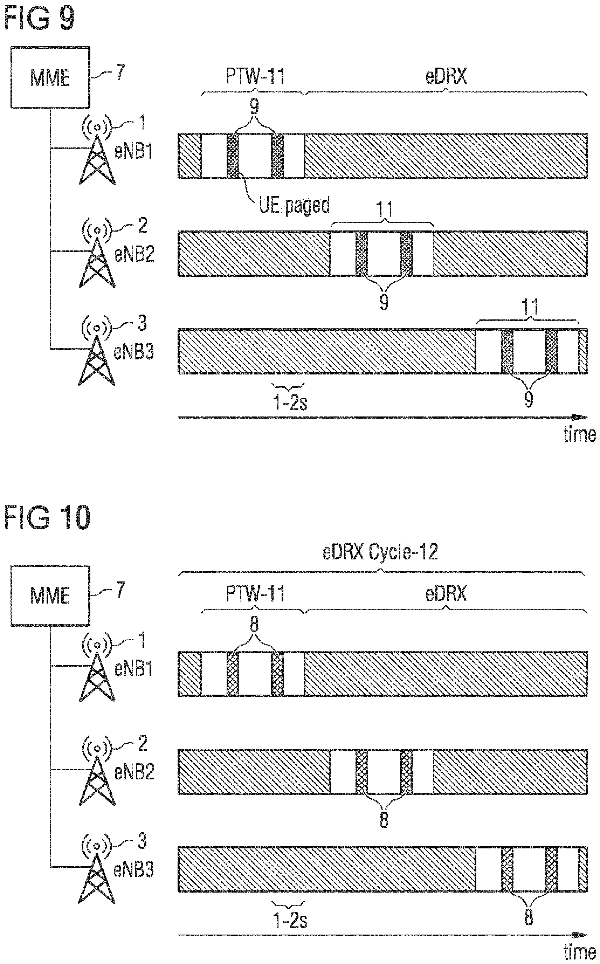

When applying the inventive efficient paging method for UEs using extended discontinuous reception (eDRX) and a randomized paging time windows procedure, the above-mentioned use case presented in figure 8 changes as follows. The MME 7 in figure 9 again selects two attempts, also called paging occasions 8, per paging time window 11. In contrast to figure 8, the PTW 11 is shorter. The MME 7 does not need to provision for the escalation of the paging to additional paging occasions 8 within the PTW 11. The PTW length is reduced from 4 to 2 POs.

Based on the identity of the eNodeB, the start of the PTW 11 assigned to the UE is pseudo-random within the eDRX cycle 12 as shown in figure 10. For example, the UE associated with eNodeB 1 in figure 10 is assigned a PTW 11 at the start of the eDRX cycle 12. When reselecting UE to eNodeB 2, the PTW 11 changes from the start to the middle of the eDRX cycle 12. Similarly, the PTW 11 changes again when reselecting UE to the shown eNodeB 3.

For high mobile UEs, the MME 7 might use the blanket paging strategy the following way:
Firstly, the MME 7 determines eNodeB(s) where the PTW 11 is starting next for the target UE. Then the MME 7 pages the UE at this eNodeB determined first. The MME 7 stops the paging on success. On paging failure, the MME 7 continues with the first step until all eNodeB(s) in the associated TA(s) have been processed.

For low mobile and nomadic UEs, the MME 7 might make use of information at which a UE was registered last:
Firstly, the MME 7 determines the PTW 11 of the UE at eNodeB where the UE was registered last. The MME 7 pages the UE at the eNodeB determined first at the time of the PTW start. The MME 7 stops paging on success. On paging failure, the MME 7 returns per default to blanket paging described for high mobile UEs mentioned above.

List of Reference Signs

1     First eNodeB, first radio access node

2    A second eNodeB
3    A third eNodeB
4    A fourth eNodeB
5    A fifth eNodeB
6    Tracking area
7    Mobility Management Entity
8    Paging occasion
9    UE is paged
10   UE is not paged
11   Paging time window
12   Extended discontinuous reception cycle

**Claims**

1.   A method for efficient paging of mobile user equipment, UEs, using extended discontinuous reception, eDRX, and a randomized paging time windows, PTWs, procedure, the method comprising the following steps:

- step 1: a mobile management entity (7), MME, determines at least one eNodeB (1) of several eNodeBs (1-5) located within a tracking area (6), TA, of a target UE, where a paging time window (11), PTW, for said UE is starting next;
- step 2: the MME (7) pages the UE during the paging time window (11) of an eDRX cycle of the at least one eNodeB determined in step 1;
- step 3: the MME (7) stops the paging if it was successful,
- otherwise the MME (7) continues with step 1 until all eNodeBs (1-5) in the associated TA (6) of the target UE have been proceeded,

wherein the paging time windows (11) within the eDRX cycle are pseudo-randomly allocated and non-synchronized between eNodeBs (1-5), and wherein a randomized paging time window start of the eDRX cycle of each of the several eNodeBs (1-5), is achieved by including an identification of the eNodeB in a calculation on the PTW procedure for the target UE using an E-UTRAN Cell Identifier, ECI, wherein a hashed ID of a Hyper-Frame, H-SFN, where the PTW starts, is calculated by hashed ID = ~ (crc32(0xFFFF FFFF) ^ crc32(M-TMSI ^ ECI)).

2.   The method according to claim 1, wherein for low mobile and nomadic UEs, the MME (7) at first determines the PTW (11) of the UE at an eNodeB of the TA (6) of the UE where the UE was registered last, pages the UE at said eNodeB the PTW starts, and stops the paging if it was successful, otherwise the MME (7) continues with step 1 in claim 1.

3.   The method according to claim 1, wherein the hashed ID is determined by the UE and / or by the MME (7).

4.   The method according to claim 1, wherein during a reselection of the UE from one eNodeB to another, the UE is reading a System-Information-Block1 that contains the ECI, for determining the PTW start within a new eNodeB.

5.   The method according to one of the claims 1 to 4, wherein the randomized paging time windows, PTWs, procedure is requested by the UE in an attach request message or in a tracking area update request message exchanged between the UE and a network, wherein the network signals an activation of the randomized PTWs procedure within a respective attach accept message or a tracking area update accept message.

6.   The method according to one of the claims 1 to 5, wherein the method is applicable to all cellular technologies with extended idle mode DRX support, like E-UTRAN LTE, EMTC CAT-M, 5G technologies NR and 5G core.

**Patentansprüche**

1.   Verfahren zum effizienten Paging von mobilen Benutzergeräten, UEs, unter Verwendung von erweitertem diskontinuierlichem Empfang, eDRX, und einer randomisierten Paging-Zeitfenster- bzw. PTWs-Prozedur, wobei das Verfahren die folgenden Schritte umfasst:

- Schritt 1: eine mobile Verwaltungsentität (7), MME, bestimmt mindestens eine eNodeB (1) von mehreren eNodeBs (1-5), die sich in einem Verfolgungsbereich (6), TA, eines Ziel-UE befinden, in dem ein Paging-Zeitfenster (11), PTW, für das UE als nächstes beginnt;
- Schritt 2: die MME (7) pagt das UE während des Paging-Zeitfensters (11) eines eDRX-Zyklus der in Schritt 1 bestimmten mindestens einen eNodeB;
- Schritt 3: die MME (7) beendet das Paging, wenn es erfolgreich war,
- andernfalls fährt die MME (7) mit Schritt 1 fort, bis alle eNodeBs (1-5) in dem assoziierten TA (6) des Ziel-UE verarbeitet wurden,

wobei die Paging-Zeitfenster (11) in dem eDRX-Zyklus unter den eNodeBs (1-5) pseudozufällig zugewiesen und nicht synchronisiert sind und wobei ein randomisierter Beginn eines Paging-Zeitfensters des eDRX-Zyklus jeder der mehreren eNodeBs (1-5) erreicht wird, indem eine Identifikation der eNodeB in eine Berechnung in der PTW-Prozedur für das Ziel-UE unter Verwendung einer E-UTRAN-Zellenkennung, ECI, einbezogen wird, wobei eine gehashte ID eines Hyperframes, H-SFN, in dem das PTW beginnt, durch gehashte ID = ~ (crc32(0xFFFF FFFF) ^ crc32(M-TMSI ^ ECI)) berechnet wird.

2. Verfahren nach Anspruch 1, wobei die MME (7) für wenig mobile und nomadische UEs zuerst das PTW (11) des UE an einer eNodeB des TA (6) des UE, in dem das UE zuletzt registriert war, bestimmt, das UE an der eNodeB, an der das PTW beginnt, pagt und das Paging beendet, wenn es erfolgreich war, andernfalls fährt die MME (7) mit Schritt 1 in Anspruch 1 fort.

3. Verfahren nach Anspruch 1, wobei die gehashte ID durch das UE und/oder durch die MME (7) bestimmt wird.

4. Verfahren nach Anspruch 1, wobei das UE während einer Neuanwahl des UE von einer eNodeB zu einer anderen einen System-Information-Block1 liest, der die ECI zum Bestimmen des PTW-Starts innerhalb einer neuen eNodeB enthält.

5. Verfahren nach einem der Ansprüche 1 bis 4, wobei die randomisierte Paging-Zeitfenster- bzw. PTWs-Prozedur durch das UE in einer Anbindungsanforderungsnachricht oder in einer Verfolgungsbereichsaktualisierungsanforderungsnachricht , die zwischen dem UE und einem Netz ausgetauscht wird, angefordert wird, wobei das Netz eine Aktivierung der randomisierten PTWs-Prozedur in einer jeweiligen Anbindungsannahmenachricht oder einer Verfolgungsbereichsaktualisierungsannahmenachricht signalisiert.

6. Verfahren nach einem der Ansprüche 1 bis 5, wobei das Verfahren auf alle Mobilfunktechnologien mit Extended-Idle-Mode-DRX-Unterstützung wie E-UTRAN LTE, EMTC CAT-M, die 5G-Technologien NR und 5G Core anwendbar ist.

**Revendications**

1. Procédé pour des opérations efficaces de radiomessagerie ou de télé-appel d'équipements utilisateurs mobiles, UE, utilisant une réception discontinue étendue, eDRX, et une procédure par fenêtres temporelles aléatoires de radiomessagerie ou de télé-appel, PTW, le procédé comprenant les étapes suivantes :

- étape 1 : une entité de gestion mobile (7), MME, détermine au moins un eNodeB (1) de plusieurs eNodeB (1-5) localisés à l'intérieur d'une zone de suivi (6), TA, d'un UE cible, où une fenêtre temporelle de radiomessagerie ou de télé-appel (11), PTW, pour ledit UE démarre ensuite ;
- étape 2 : la MME (7) réalise une opération de radiomessagerie ou de télé-appel sur l'UE pendant la fenêtre temporelle de radiomessagerie ou de télé-appel (11) d'un cycle eDRX de l'au moins un eNodeB déterminé au niveau de l'étape 1 ;
- étape 3 : la MME (7) arrête l'opération de radiomessagerie ou de télé-appel si elle a réussi,
- sinon, la MME (7) poursuit l'étape 1 jusqu'à ce que tous les eNodeB (1-5) dans la TA associée (6) de l'UE cible aient été traités,

dans lequel les fenêtres temporelles de radiomessagerie ou de télé-appel (11) à l'intérieur du cycle eDRX sont attribuées de façon pseudo-aléatoire et sont non synchronisées entre les eNodeB (1-5), et dans lequel un démarrage de fenêtre temporelle aléatoire de radiomessagerie ou de télé-appel du cycle eDRX de chacun des plusieurs eNodeB (1-5) est réalisé en incluant une identification du eNodeB dans un calcul portant sur la procédure PTW pour l'UE cible en utilisant un identifiant de cellule(s) E-UTRAN, ECI, dans lequel un ID haché d'une hyper-trame, H-SFN, où la PTW démarre, est calculé selon

$$\text{ID haché} = \sim (\text{crc32}(0x\text{FFFF FFFF})\hat{\ }\text{crc32}(\text{M-TMSI}\hat{\ }\text{ECI})).$$

2. Procédé selon la revendication 1, dans lequel, pour les UE à mobilité faible et nomades, la MME (7) détermine tout d'abord la PTW (11) de l'UE au niveau d'un eNodeB de la TA (6) de l'UE où l'UE a été enregistré en dernier, réalise une opération de radiomessagerie ou de télé-appel sur l'UE au niveau dudit eNodeB où la PTW démarre, et arrête l'opération de radiomessagerie ou de télé-appel si elle a réussi, sinon la MME (7) poursuit l'étape 1 selon la revendication 1.

3. Procédé selon la revendication 1, dans lequel l'ID haché est déterminé par l'UE et/ou par la MME (7).

4. Procédé selon la revendication 1, dans lequel, pendant une sélection à nouveau de l'UE d'un eNodeB à un autre, l'UE lit un bloc d'informations système System-Information-Block1 qui contient l'ECI pour déterminer le démarrage de PTW à l'intérieur d'un nouveau eNodeB.

5. Procédé selon l'une quelconque des revendications 1 à 4, dans lequel la procédure par fenêtres temporelles aléatoires de radiomessagerie ou de télé-appel, PTW, est demandée par l'UE dans un message de demande de lien ou dans un message de demande de mise à jour de zone de suivi qui est échangé entre l'UE et un réseau, dans lequel le réseau signale une activation de la procédure par PTW aléatoires à l'intérieur d'un message d'acceptation de lien respectif ou d'un message d'acceptation de mise à jour de zone de suivi.

6. Procédé selon l'une quelconque des revendications 1 à 5, le procédé pouvant être appliqué à toutes les technologies cellulaires avec support DRX en mode veille étendu, telles que E-UTRAN LTE, EMTC CAT-M, les technologies 5G NR et 5G de base.

FIG 1

# FIG 2

One Hyperframe Cycle=1024 Hyperframe (2 Hours, 54 minutes and 46 Seconds)

| Hyperframe #0 | Hyperframe #1 | - - - - - - - - - - - - - - | Hyperframe #1023 |

| Frame #0 | Frame #1 | Frame #2 | - - - - - - - - | Frame #1022 | Frame #1023 |

One Frame= 10 ms

| SF #0 | SF #1 | SF #2 | SF #3 | SF #4 | - - - - - - - | SF #7 | SF #8 | SF #9 |

Subframe= 1 ms

| Slot #0 | Slot #1 |

Slot= 0.5 ms

NB-IoT frame structure for 15 kHz subcarrier spacing- Downlink and Uplink

EP 4 017 156 B1

# FIG 3

EP 4 017 156 B1

FIG 4

| UE | eNodeB | MME | S-GW | P-GW |

0. UE is ECM idle

1. Downlink data

2. Downlink data Notification

3. Paging

4. Paging

2. Downlink data Notification ACK

5. RRC Connection establishment (NAS Control Plane Service request)

5b. Retrieve UE context

7. Modify Bearer Request

8. Modify Bearer Request

6. S1-AP Initial UE Message (NAS Control Plane Service request)

10. Modify Bearer Response

9. Modify Bearer Response

11. Downlink data

12. Data encryption and Integrity protection

13. Downlink S1-AP msg (NAS DATA PDU with EBI)

14. RRC DL msg (NAS PDU with data)

15. NAS Delivery notification

16. RRC UL msg (NAS PDU with data)

17. UL S1-AP msg (NAS DATA PDU with EBI)

18. Check integrity and decrypts data)

19. Uplink data

19. Uplink data

20. No further activity detected

21. S1 release procedure (see clause 5.3.5)

EP 4 017 156 B1

## FIG 5

## FIG 6

FIG 7 PRIOR ART

FIG 8 PRIOR ART

# FIG 9

# FIG 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018063467 A1
- US 20180263012 A1
- US 9560628 B2
- US 20180176883 A1

**Non-patent literature cited in the description**

- **INTEL COOPERATION.** Remaining issues in eDRX. *3GPP DRAFT, R2-163633,* 22 May 2016
- **ERICSSON.** Wake Up Signal. *3GPP DRAFT; R2-1804962*